# EUROPÄISCHE PATENTSCHRIFT

(11) **EP 3 325 784 B1**
(45) Veröffentlichungstag und Bekanntmachung des Hinweises auf die Patenterteilung: **12.06.2019**
(21) Anmeldenummer: 16751203.7
(22) Anmeldetag: 22.07.2016
(51) Int. Cl.: F02B 37/18, F02D 9/10, F16K 31/50, F02M 26/48, F02M 26/67, F16K 31/44, F16K 37/00, G01D 5/14, G01D 11/24

(54) **BAUGRUPPE FÜR EINE STELLEINRICHTUNG, INSBESONDERE EINES ABGASTURBOLADERS**
ASSEMBLY FOR A CONTROL DEVICE, IN PARTICULAR OF AN EXHAUST TURBOCHARGER
MODULE DESTINÉ À UN DISPOSITIF DE RÉGLAGE, EN PARTICULIER UN TURBOCOMPRESSEUR À GAZ D'ÉCHAPPEMENT

(30) Priorität: 22.07.2015 DE 102015213828
(43) Veröffentlichungstag der Anmeldung: 30.05.2018
(73) Patentinhaber: MAHLE International GmbH, 70376 Stuttgart (DE)
(72) Erfinder: NIEKAMP, Peer, 71397 Leutenbach (DE)
(74) Vertreter: BRP Renaud & Partner mbB Rechtsanwälte Patentanwälte Steuerberater
(86) Internationale Anmeldenummer: PCT/EP2016/067528
(87) Internationale Veröffentlichungsnummer: WO 2017/013247

(56) Entgegenhaltungen:
- EP-A1- 2 803 888
- DE-A1-102011 118 895
- US-A1- 2013 049 502

## Beschreibung

Die Erfindung betrifft eine Baugruppe für eine Stelleinrichtung, insbesondere eines Abgasturboladers sowie eine Stelleinrichtung mit wenigstens einer solchen Baugruppe.

Drehbare Wellen finden im Fahrzeugbau als Teil einer Stelleinrichtung in vielfältiger Weise Anwendung. Bekannt ist beispielsweise die Verwendung solcher Stelleinrichtungen in Wastegate-Ventilen oder in variablen Turbinengeometrien von Abgasturboladern.

Von erheblicher Bedeutung ist dabei einerseits eine mechanisch stabile, drehbare Lagerung der Welle an einem Gehäuse, andererseits aber auch die Möglichkeit einer möglichst genauen Bestimmung der aktuellen Drehposition der Welle relativ zum ortsfesten Gehäuse.

Vor diesem Hintergrund beschreibt die EP1 884 636 A1 eine variable Turbinengeometrie mit einer drehbaren Welle, an welcher stirnseitig ein Permanentmagnet angeordnet ist. Zusammen mit einem Auswertungselement bildet besagter Permanentmagnet einen Drehwinkel-Sensor.

Die DE 10 2011 120 245 A1 behandelt einen elektrischen Wastegate-Aktuator. Eine Rotationswelle des Aktuators ist dabei mit einem unteren Abschnitt eines Installationsraums gekoppelt. Am unteren Ende der Rotationswelle ist ein Magnet installiert, welcher mit einem am unteren Abschnitt des Installationsraums angeordneten Sensors gekoppelt ist. Der Magnet und der Sensor bilden eine Sensoreinheit zur Bestimmung des momentanen Drehwinkels der Rotationswelle relativ zum Installationsraum.

Ferner beschreibt DE 10 2011 118895 A1 einen elektrischen Waste-Gate-Aktuator für einen Turbolader.

Es ist eine Aufgabe der Erfindung, bei der drehbaren Lagerung von Wellen in einem Gehäuse und bei der damit verbundenen Ermittlung des momentan eingestellten Drehwinkels der Welle relativ zum Gehäuse neue Wege aufzuzeigen. Diese Aufgabe wird durch den Gegenstand der unabhängigen Patentansprüche gelöst. Bevorzugte Ausführungsformen sind Gegenstand der abhängigen Patentansprüche.

Grundgedanke der Erfindung ist demnach, eine Welle mit einem Magnetelement mittels einer Lagereinrichtung drehbar an einem Gehäuseteil zu lagern und an diesem Gehäuseteil einen mit dem Magnetelement zusammenwirkenden Magnetfeldsensor anzubringen, so das vom Magnetfeldsensor die momentane Drehwinkel-Position der Welle relativ zum Gehäuseteil ermittelt werden kann. Da der Magnetfeldsensor ortsfest am Gehäuseteil angebracht ist und auch das Magnetelement - über die Welle und über die Lagereinrichtung - in einer wohldefinierten Position relativ zum Gehäuseteil mit dem Magnetfeldsensor angeordnet ist, lässt sich die gesuchte Drehwinkel-Position relativ zum Gehäuseteil trotz des vergleichsweise einfachen konstruktiven Aufbaus mit sehr hoher Genauigkeit bestimmen.

Die hier vorgestellte Baugruppe stellt also eine drehbar an einem Gehäuseteil gelagerte Welle bereit, welche eine genaue Drehwinkel-Bestimmung der Welle relativ zum Gehäuseteil gestattet und dennoch mit geringen Herstellungskosten verbunden ist.

Eine erfindungsgemäße Baugruppe für eine Stelleinrichtung umfasst ein Gehäuseteil sowie eine Welle, welche mittels einer separat zum Gehäuseteil ausgebildeten Lagereinrichtung drehbar am Gehäuseteil gelagert ist. Am Gehäuseteil ist ein Magnetfeldsensor angebracht, welcher mit einem drehfest an der Welle angebrachten Magnetelement zur Ermittlung der Drehwinkel-Position der Welle relativ zum Gehäuseteil zusammenwirkt. Hierzu detektiert der Magnetfeldsensor durch die Drehbewegung der Welle bedingte Änderungen in dem vom Magnetelement erzeugten magnetischen Feld.

Bei einer bevorzugten Ausführungsform sind die Lagereinrichtung und der Magnetfeldsensor am selben Gehäuseteil angebracht. Auf diese Weise kann die Genauigkeit, mit welcher die Welle relativ zum Magnetfeldsensor positioniert werden kann, gegenüber herkömmlichen Anordnungen, bei welchen der Magnetfeldsensor und die Lagereinrichtung an verschiedenen Gehäuseteilen angeordnet sind, erheblich verbessert werden.

Bei einer weiteren bevorzugten Ausführungsform kann ein dem Magnetfeldsensor zugewandter axialer Endabschnitt der Welle mittels der Lagereinrichtung drehbar am Gehäuseteil gelagert sein. Diese Maßnahme bewirkt, dass die Welle im Bereich des Magnetelements am Gehäuseteil gelagert ist, so dass das Magnetelement präzise zum Magnetfeldsensor ausgerichtet werden kann.

Besonders zweckmäßig kann das Magnetelement auf einer dem Magnetfeldsensor zugewandten Stirnseite der Welle angeordnet sein. Diese Maßnahme bewirkt, dass eine besonders hohe magnetische Kopplung zwischen Magnetelement und Magnetfeldsensor erreicht wird. Dies wiederum führt zu einer verbesserten Genauigkeit, mit welcher sich die momentane Drehwinkel-Position der Welle relativ zum Gehäuseteil bestimmen lässt.

Das vom Magnetelement erzeugte magnetische Feld kann vom Magnetfeldsensor besonders genau bestimmt werden, indem dieser innenseitig auf einem Wandabschnitt des Gehäuseteils und im Abstand zum Magnetelement angeordnet wird. Bei dieser Variante erfolgt die seitliche Ausrichtung des Magnetfeldsensors quer zur axialen Richtung der Welle derart, dass eine virtuelle Verlängerungsgerade der Welle auf den Magnetfeldsensor trifft.

Gemäß einer weiteren bevorzugten Ausführungsform umfasst die Lagereinrichtung ein hülsenartig ausgebildetes Lagerelement, durch welches die Welle durchsteckbar ist. Dies vereinfacht die Montage der Welle in der Lagereinrichtung, ohne dass damit eine unerwünschte Herabsetzung der erreichbaren Positioniergenauigkeit einherginge.

Kostenvorteile bei der Herstellung lassen sich bei einer weiteren bevorzugten Ausführungsform erzielen, gemäß welcher die Lagereinrichtung genau ein Lagerelement umfasst, so dass die Welle mittels eines einzigen hülsenförmigen Lagerelements am Gehäuseteil gelagert ist. Denkbar ist aber auch die Verwendung zweier oder mehrerer Lagerelemente, die axial im Abstand zueinander angeordnet und am Gehäuseteil befestigt sind. Denkbar ist auch die Bereitstellung weiterer Lagerelemente, die an zusätzlichen Gehäuseteilen befestigt sind.

Für eine dauerhaft stabile Befestigung des Magnetelements an der Welle wird in der Erfindung vorgeschlagen, auf der dem Magnetfeldsensor zugewandten Stirnseite der Welle eine Ausnehmung auszubilden, in welcher das Magnetelement wenigstens teilweise, vorzugsweise vollständig, aufnehmbar oder aufgenommen ist.

Bei einer anderen bevorzugten Ausführungsform weist die Lagereinrichtung ein topfartig ausgebildetes Lagerelement auf, welches das Magnetelement einkapseit, also teilweise umhüllt. Bevorzugt kann das Magnetelement in der Ausnehmung aufgenommen sein. Diese Ausgestaltung bewirkt einen Schutz des Magnetelements vor elektrischen Spannungsüberschlägen.

Besonders bevorzugt weist das topfartige Lagerelement einen Topfboden auf, welcher axial zwischen dem Magnetelement und dem Magnetfeldsensor angeordnet ist. Der Topfboden ist vorzugsweise integral am Lagerelement ausgeformt. Diese Variante ist besonders einfach herzustellen.

Bei einer vorteilhaften Weiterbildung deckt der Topfboden die Ausnehmung mit dem Magnetelement ab. Auf diese Weise kann der Magnetfeldsensor wirksam gegen einen elektrischen Spannungsüberschlag und gegen eine damit etwaig einhergehende Beschädigung oder Zerstörung geschützt werden.

Bei einer anderen bevorzugten Ausführungsform umfasst die Lagereinrichtung ein Lagerelement, welches in einem Längsschnitt entlang der Drehachse der Welle eine H-förmige Geometrie mit einer ersten und einer zweiten Ausnehmung aufweist. Die beiden Ausnehmungen dienen zur Aufnahme des Magnetelements bzw. des Magnetfeldsensor. Die beiden Ausnehmungen liegen einander entlang einer durch die Drehachse definierten axialen Richtung gegenüber. In der ersten Ausnehmung ist die Welle mit dem Magnetelement drehbar gelagert. In der zweiten Ausnehmung ist der Magnetfeldsensor aufgenommen. Auf diese Weise kann der Magnetfeldsensor besonders wirksam gegen einen elektrischen Spannungsüberschlag und gegen eine damit einhergehende Beschädigung oder gar Zerstörung geschützt werden.

Besonders zweckmäßig kann sich das Lagerelement im Bereich des Wandabschnitts an dem Gehäuseteil abstützen, so dass es den in der zweiten Ausnehmung angeordneten Magnetfeldsensor umhüllt. Bei dieser Variante übernimmt das Gehäuseteil die Funktion eines axialen Anschlags für das Lagerelement. Daher kann dieses besonders präzise relativ zum Gehäuseteil positioniert werden. Besonders bevorzugt ist das Gehäuseteil als Spritzgussteil ausgebildet. Dies erlaubt eine kostengünstige Herstellung des Gehäuseteils aus einem Kunststoff, an welchem die weiteren Komponenten der Baugruppe, insbesondere die Lagereinrichtung, die bevorzugt ebenfalls aus Kunststoff hergestellt ist, und/oder der Magnetfeldsensor und/oder das Magnetelement, mittels Einpressen befestigt werden können.

Besonders zweckmäßig empfiehlt sich also die Fixierung des Magnetfeldsensors mittels Vergießens oder Verklebens oder mittels einer Präg-Verbindung oder mittels einer Schweißverbindung an dem Gehäuseteil. Alle genannten Befestigungsmethoden stellen eine dauerhafte Befestigung bei gleichzeitig geringen Kosten zur Realisierung sicher.

Eine dauerhafte und besonders stabile Befestigung des Lagerelements der Lagereinrichtung am Gehäuseteil lässt sich erreichen, wenn das Lagerelement in einem komplementär zur Lagereinrichtung ausgebildeten Gehäusewandabschnitt des Gehäuseteils aufgenommen ist.

Erfindungsgemäss ist besagter Gehäusewandabschnitt in der Art eines ringförmigen Stegs mit ringsegmentförmiger Geometrie ausgebildet, in welchem das Lagerelement aufnehmbar ist. In einem solchen, im ringsegment-artig ausgebildeten Steg aufgenommenen Zustand kann eine Außenumfangsfläche des Lagerelements flächig an einer Innenumfangsfläche des ringförmigen Stegs anliegen. In einem solchen Szenario wird das hülsenartige Lagerelement außenumfangsseitig teilweise vom Steg mit ringsegment-artiger Geometrie eingefasst.

Bei einer anderen bevorzugten Ausführungsform ist der Magnetfeldsensor derart am Gehäuseteil angeordnet, dass er bezüglich einer Draufsicht auf das Gehäuseteil in axialer Richtung der Drehwelle nicht vom Steg mit besagter ringsegmentförmiger Geometrie verdeckt ist. Dies erleichtert die Montage des Sensors am Gehäuseteil, da dieser vor dem Einsetzen des Lagerelements in das Gehäuseteil platziert und befestigt werden kann.

Alternativ kann das Ringsegment auch geschlossen ausgeführt werden. In diesem Fall ist unter dem Ringsegment eine seitliche Öffnung ausgebildet, durch die der Magnetfeldsensor unter dem Ringsegment platziert und befestigt werden kann. Eine solche Öffnung kann zum Beispiel bei der Herstellung des Gehäuseteils mittels eines Spritzgussverfahrens durch einen Schlepp- und/oder Seitenschieber realisiert werden.

Besonders zweckmäßig beträgt ein axialer Abstand des Magnetelements zum Magnetfeldsensor maximal 20 mm, vorzugsweise maximal 5 mm. Alternativ oder zusätzlich beträgt ein axialer Abstand des Lagerelements zum Magnetfeldsensor maximal 30 mm, vorzugsweise maximal 20 mm. Beide Maßnahmen, für sich genommen oder in Kombination, begünstigen eine präzise Positionierung des Magnetelements in geringem Abstand zum Magnetfeldsensor. Die führt zu einer verbesserten Genauigkeit, mittels welcher der gesuchte Drehwinkel der Welle relativ zum Gehäuseteil bestimmt werden kann.

Besonders bevorzugt kann die Lagereinrichtung, insbesondere das Lagerelement, mittels Einpressens am Gehäuseteil befestigt sein. Dies führt zu einer weiteren Reduzierung der Fertigungskosten, da aufwändige Maßnahmen zum Befestigen der Lagereinrichtung, insbesondere des Lagerelements am Gehäuseteil entfallen.

Alternativ empfiehlt sich eine Befestigung der Lagereinrichtung, insbesondere des Lagerelements, mittels Einpressens oder mittels einer Präg-Verbindung oder mittels Formschlusses, insbesondere mittels wenigstens eines Schnapphakens, der am Gehäuseteil befestigt ist.

Die Erfindung betrifft ferner eine Stelleinrichtung einer variablen Turbinengeometrie oder einer Wastegate-Einrichtung, jeweils eines Abgasturboladers für ein Kraftfahrzeug, mit wenigstens einer vorangehend vorgestellten Baugruppe.

Die Erfindung betrifft auch eine Stelleinrichtung einer Ventileinrichtung einer Abgas-Rückführungsanlage für ein Kraftfahrzeug mit wenigstens einer vorangehend vorgestellten Baugruppe.

Die Erfindung betrifft weiterhin eine Stelleinrichtung eines Klappenventils, insbesondere einer Frischluftanlage für ein Kraftfahrzeug, mit wenigstens einer vorangehend vorgestellten Baugruppe.

Ein Verfahren zum Herstellen einer Baugruppe, insbesondere der vorangehend erläuterten Baugruppe wird beschrieben.

In einem Verfahrensschritt a) wird ein Gehäuseteil bereitgestellt, an welchem ein als Steg mit ringsegment-förmiger Geometrie ausgebildeter Gehäusewandabschnitt zur Aufnahme eines Lagerelements vorgesehen ist. In einem weiteren Verfahrensschritt b) wird der Magnetfeldsensor durch den ringsegment-förmigen Steg, also durch die vom Steg teilweise eingefasste Durchgangsöffnung hindurchgeführt und anschließendes auf dem Gehäuseteil angeordnet.

In einem weiteren Schritt c) wird das Lagerelement an dem Gehäusewandabschnitt des Gehäuseteils angebracht, und zwar vorzugsweise mittels Einpressens. Die ringsegment-artige Geometrie des Steges erlaubt also eine Montage des Magnetfeldsensors vor Anbringung des Lagerelements am Gehäuseteil. Dies erleichtert den Zusammenbau der Baugruppe.

Bei einer vorteilhaften Weiterbildung wird die Welle mit dem Magnetelement teilweise durch die in der Lagereinrichtung vorgesehene Durchgangsöffnung durchgesteckt. Dies geschieht derart, dass die Welle mittels eines axialen Endabschnitts drehbar am Gehäuseteil gelagert ist und der durch die Lagereinrichtung durchgesteckte Magnetfeldsensor mit dem Magnetelement zur Ermittlung der Drehwinkel-Position der Welle relativ zum Gehäuseteil zusammenwirkt.

Bei einem Beispiel umfasst das Verfahren einen dem Verfahrensschritt a) vorangehenden Schritt a0), gemäß welchem am Gehäuseteil eine Auswertungseinheit befestigt wird. Bei dieser Variante wird die Auswertungseinheit also vor der Montage der Lagereinrichtung am Gehäuseteil vormontiert. Somit kann die Auswertungseinheit für einen Werker gut zugänglich vor der Montage von Lagereinrichtung und Welle am Gehäuseteil elektrisch verdrahtet werden.

Bei einem Beispiel erfolgt das Befestigen der Auswertungseinheit am Gehäuseteil mittels Umspritzen des Gehäuseteils, vorzugsweise mit einem Kunststoff.

Bei einer vorteilhaften Weiterbildung weist das Verfahren einen auf den Schritt b) oder c) nachfolgenden Schritt x) auf, gemäß welchem der Magnetfeldsensors elektrisch mit der Auswertungseinheit verbunden wird.

Vorzugsweise wird das Gehäuseteil mittels eines Kunststoff-Spritzverfahrens hergestellt. Dies führt zu reduzierten Fertigungskosten, zumal sich die zentralen Komponenten der Baugruppe wie der Lagereinrichtung bzw. des Magnetfeldsensors mittels Einpressens bzw. Vergießens, Klebens, mittels Einprägens oder mittels einer Schweißverbindung am Gehäuseteil befestigen lassen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch:
- Fig. 1: ein Beispiel einer erfindungsgemäßen Baugruppe,
- Fig. 2: das Gehäuseteil der Baugruppe in einem Bereich der Lagereinrichtung,
- Fig. 3: eine erste Variante des Beispiels der Figur 1,
- Fig. 4: eine zweite Variante des Beispiels der Figur 2.

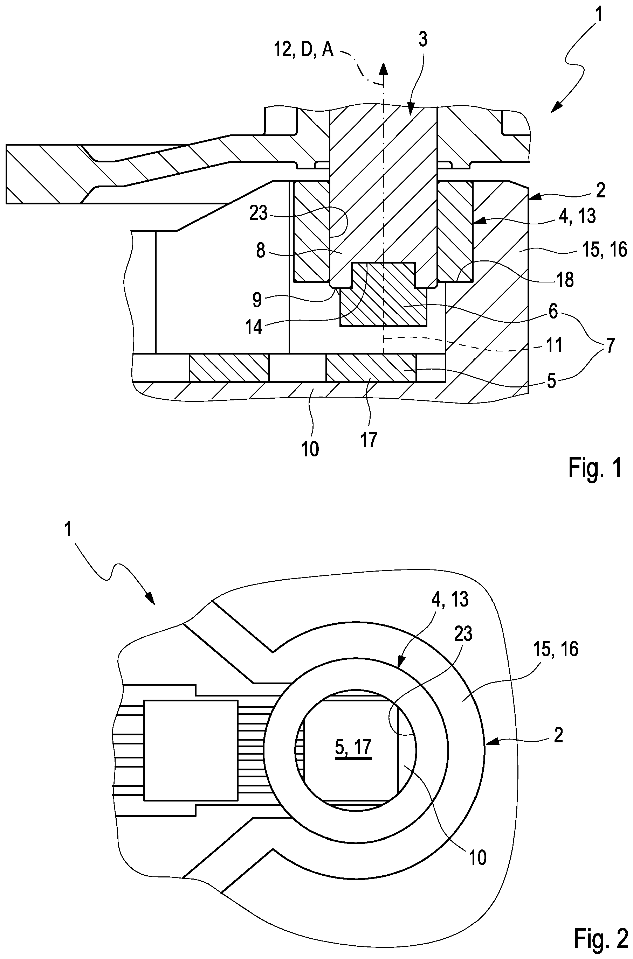

Die Figur 1 zeigt ein Beispiel einer erfindungsgemäßen Baugruppe 1. Diese umfasst ein Gehäuseteil 2 und eine Welle 3. Die Welle 3 ist mittels einer separat zum Gehäuseteil 2 ausgebildeten Lagereinrichtung 4 drehbar am Gehäuseteil 2 gelagert. Die Welle 3 kann in der Art eines Zylinders ausgebildet sein, durch dessen Mittellängsachse 12 eine Drehachse D der Welle 3 definiert ist. Durch die Mittellängsachse 12 wird ferner eine axiale Richtung A der Welle 3 definiert.

Die Lagereinrichtung 4 und der Magnetfeldsensor 5 sind, jeweils ortsfest, am selben Gehäuseteil 2 angebracht. Bevorzugt ist das Gehäuseteil 2 als Spritzgussteil aus einem Kunststoff ausgebildet. Vorzugsweise ist der Magnetfeldsensor 5 mittels Vergießens, Klebens, oder mittels einer Präg-Verbindung oder mittels Schweißen an dem Gehäuseteil 2 fixiert. Gemäß Figur 1 erfolgt die drehbare Lagerung der Welle 3 mit Hilfe der Lagereinrichtung 4 über einen dem Magnetfeldsensor 5 zugewandten axialen Endabschnitt 8 der Welle 3. Hierzu umfasst die Lagereinrichtung 4 ein hülsenartig ausgebildetes Lagerelement 13, durch welches die Welle 3 im Zuge der Montage durchgesteckt werden kann. Bevorzugt umfasst die Lagereinrichtung 4 genau ein solches Lagerelement 13, denkbar sind aber auch zwei oder mehrere solche Lagerelemente, die in axialer Richtung A im Abstand zueinander angeordnet sind (im Beispiel der Figuren nicht gezeigt). Auch für das Material für die Lagereinrichtung 4 bzw. für das Lagerelement 13 kommt ein Kunststoff in Betracht. Aber auch andere Werkstoffe oder Lagerungstechnologien wie Wälzlager sind denkbar.

Wie Figur 1 erkennen lässt, ist am Gehäuseteil 2 ortsfest ein Magnetfeldsensor 5 angebracht, und an der Welle 3 ist drehfest ein Magnetelement 6 vorgesehen. Das Magnetelement 6 kann einen ein magnetisches Feld erzeugenden Permanentmagneten umfassen. Das Magnetelement 6 ist auf einer dem Magnetfeldsensor 5 zugewandten Stirnseite 9 der Welle 3 angeordnet. Das Magnetelement 6 und der Magnetfeldsensor 5 bilden zusammen einen Drehwinkel-Sensor 7 aus.

Zur Ermittlung der Drehwinkel-Position der Welle 3 relativ zum Gehäuseteil 2 wirkt der Magnetfeldsensor 5 mit dem Magnetelement 6 zusammen. Dies geschieht derart, dass der Magnetfeldsensor 5 Änderungen in dem vom Magnetelement 6 erzeugten magnetischen Feld detektiert, die durch die Drehung der Welle 3 relativ zum Gehäuseteil 2 und somit zum Magnetfeldsensor 5 verursacht werden. Der Magnetfeldsensor 5 kann beispielsweise als Hall-Sensor ausgebildet sein, der elektrisch mit einer elektronischen Auswertungseinrichtung 17 verbunden ist. Die Auswertungseinrichtung 17, die etwa als Integrierter Schaltkreis (IC) realisiert sein kann, wertet die vom Hall-Sensor erzeugten Sensordaten aus und wandelt dies in elektronische Signale um, die von einem Steuergerät (nicht gezeigt) weiterverarbeitet werden können. Auch die elektronische Auswertungseinrichtung 17 kann am Gehäuseteil 2 befestigt sein.

Wie die Darstellung der Figur 1 anschaulich belegt, ist der Magnetfeldsensor 5 bevorzugt innenseitig auf einem Wandabschnitt 10 des Gehäuseteils 2 und im Abstand zum Magnetelement 6 angeordnet. Die Anordnung des Magnetfeldsensors 5 erfolgt relativ zum Magnetelement 6 derart, dass eine virtuelle Verlängerungsgerade 11 der Mittellängsachse 12 der Welle 3 auf den Magnetfeldsensor 5 trifft. Auf diese Weise kann eine gute magnetische Kopplung zwischen dem Magnetelement 6 und dem Magnetfeldsensor 5 erreicht werden. In einem in dem Lagerelement 13 aufgenommenen Zustand steht die Stirnseite 9 der Welle 3 mit dem Magnetelement 6 axial über das hülsenartige Lagerelement 13 hinaus zum Magnetfeldsensor 5 hin vor. Auf der dem Magnetfeldsensor 5 zugewandten Stirnseite 9 der Welle 3 ist eine Ausnehmung 14 ausgebildet, in welcher das Magnetelement 6 wenigstens teilweise aufgenommen ist. Auf diese Weise kann das Magnetelement 6 mechanisch stabil an der Welle 3 befestigt werden. Hierzu kann das Magnetelement 6 in die Ausnehmung 14 eingeklebt sein. Die Stirnseite 9 der Welle 3 mit dem Magnetelement 6 ist axial zwischen dem Magnetfeldsensor 5 und der Lagereinrichtung 4 mit dem Lagerelement 13 angeordnet.

Die Darstellung der Figur 2 zeigt das Gehäuseteil 2 in einem Bereich der Lagereinrichtung 4, jedoch ohne die durch das Lagerelement 13 durchgesteckte Welle 3. Man erkennt, dass das hülsenartig ausgebildete Lagerelement 13 in einem komplementär zum Lagerelement 13 ausgebildeten Gehäusewandabschnitt 15 des Gehäuseteils 2 aufgenommen ist. Besagter Gehäusewandabschnitt 15 ist als Steg 16 mit ringsegment-förmiger Geometrie ausgebildet und fasst das hülsenartige Lagerelement 13 außenumfangsseitig teilweise ein. Der Figur 2 entnimmt man, dass der Magnetfeldsensor 5 in einer Draufsicht auf das Gehäuseteil 2 entlang der axialen Richtung A der Drehwelle 3 nicht vom ringsegment-artig ausgebildeten Steg 16 verdeckt wird. Eine derartige Anordnung erleichtert die Montage des Magnetfeldsensors 5 am Gehäuseteil 2 im Bereich des Wandabschnitts 10, wenn der Magnetfeldsensor 5 vor dem Einsetzen der Lagereinrichtung 4 mit dem Lagerelement 13 in dem Gehäuseteil 2 platziert und befestigt wird. Bevorzugt ist das Lagerelement 13 mittels Einpressen oder mittels einer Präg-Verbindung am Gehäusewandabschnitt 15 bzw. am Steg 16 des Gehäuseteils befestigt.

Für eine effektive magnetische Kopplung von Magnetfeldsensor 5 und Magnetelement 6 aneinander beträgt ein axialer Abstand des Magnetelements 6 zum Magnetfeldsensor 5 des Drehwinkel-Sensors 7, gemessen entlang der virtuellen Verlängerungsgeraden 11, maximal 20 mm, vorzugsweise maximal 5 mm. Ebenso beträgt der axiale Abstand des Lagerelements 13 zum Magnetfeldsensor 5, ebenso gemessen entlang der virtuellen Verlängerungsgeraden 11, maximal 30 mm, vorzugsweise maximal 20 mm.

Die vorangehend erläuterte Baugruppe 1 zeichnet sich durch eine besonders einfache Fertigung und Zusammenbaubarkeit aus, denn das Gehäuseteil 2 lässt sich als Spritzgussteil aus einem Kunststoff kostengünstig mittels eines Spritzgussverfahrens herstellen. Die Lagereinrichtung 4 mit dem Lagerelement 13, welches vorzugsweise ebenfalls aus einem Kunststoff gefertigt ist, kann auf einfache Weise in ein solches Spritzgussteil eingepresst werden. Dies gilt insbesondere für den Fall, dass wie oben beschrieben hierfür am Gehäuseteil 2 ein Gehäusewandabschnitt 15 mit komplementär zum Lagerelement 13 ausgebildeter Geometrie als Teil des Spritzgussteils zur Verfügung steht.

Zu axialen Positionierung des Lagerelements 13 kann am Gehäusewandabschnitt 15 eine als Axialanschlag wirkende radiale Stufe 18 ausgebildet sein (vgl. Figur 1). Alternativ dazu ist es auch denkbar, das Lagerelement 13 mit einem Bund auszustatten (nicht gezeigt), der ebenfalls dem Wirkprinzip eines axialen Anschlags folgt.

Das Magnetelement 6 lässt sich mittels Vergießens, Verkleben oder mittels Einpressen oder mittels einer Präg-Verbindung auf einfache Weise mechanisch stabil an der Drehwelle 3 befestigen. Der Magnetfeldsensor 5 lässt sich ebenfalls auf einfache Weise mechanisch stabil mittels Vergießen, Kleben oder mittels einer Präg-Verbindung oder mittels einer Schweißverbindung am Gehäuseteil 2 befestigen. Das Einpressen der Lagereinrichtung 4 kann auch vor dem Anbringen des am Gehäuseteil 2 zu befestigenden Magnetfeldsensors 5 erfolgen. Alternativ dazu können die Lagereinrichtung 4 bzw. das Lagerelement 13 auch mittels einer Präg-Verbindung oder einen Formschluss, zum Beispiel über Schnapphaken am Gehäuseteil 2, befestigt werden.

Durch ein einfaches Durchstecken der Welle 3 durch das hülsenförmige Lagerelement 13 lässt sich die Welle 3 auch seitlich, also quer zur axialen Richtung A, äußerst präzise relativ zum Gehäuseteil 2 positionieren. Gleichzeitig ergibt sich eine äußerst robuste, drehbare Lagerung der Welle 3 am Gehäuseteil 2. Im Ergebnis lässt sich die hier vorgestellte Baugruppe 1 also auf einfache Weise zusammenbauen. Daraus ergeben sich erhebliche Kostenvorteile für die Herstellung der Baugruppe 1.

Im Folgenden wird der Zusammenbau der Baugruppe 1 gemäß Figur 1 erläutert. In einem Verfahrensschritt wird das Gehäuseteil 2 bereitgestellt, an welchem ein als Steg 16 mit ringsegment-förmiger Geometrie ausgebildeter Gehäusewandabschnitt 15 zur Aufnahme eines Lagerelements 13 vorgesehen ist.

In einem weiteren Verfahrensschritt kann am Gehäuseteil 2 zunächst die Auswertungseinheit 17 befestigt werden, mittels welcher die vom Magnetfeldsensor 5 bereitgestellten Sensordaten ausgewertet werden können. Dieser Vorgang kann auch ein elektrisches Verdrahten der Auswertungseinheit 17 beinhalten. Das Befestigen der Auswertungseinheit 17 am Gehäuseteil 2 kann durch Umspritzen des Gehäuseteils 2 mit einem Kunststoff erfolgen.

In einem weiteren Verfahrensschritt wird der Magnetfeldsensor 5 durch den ringsegment-förmigen Steg 16, also durch die vom Steg teilweise eingefasste Durchgangsöffnung, hindurchgeführt und anschließendes auf dem Gehäuseteil 2 angeordnet.

In einem weiteren Verfahrensschritt wird das Lagerelement 13 an dem Gehäusewandabschnitt 15 des Gehäuseteils 2 angebracht, und zwar vorzugsweise mittels Einpressens. Bevorzugt ist der Gehäusewandabschnitt 15 komplementär zum Lagerelement 13 ausgebildet. Dies erleichtert die Montage, insbesondere das Einpressen des Lagerelements 13, am Gehäuseteil 2. Die ringsegmentartige Geometrie des Steges 16 erlaubt somit eine Montage des Magnetfeldsensors 5 vor Anbringung des Lagerelements 13 am Gehäuseteil 2. Dies erleichtert den Zusammenbau der Baugruppe 1.

In einem weiteren Verfahrensschritt kann die Welle 3 mit dem Magnetelement 6 teilweise durch die in der Lagereinrichtung 4 vorgesehene Durchgangsöffnung 23 durchgeführt werden. Dies geschieht derart, dass die Welle 3 mittels eines axialen Endabschnitts 8 drehbar an der Lagereinrichtung 3 des Gehäuseteils 2 gelagert wird. Auf diese Weise kann der durch die Lagereinrichtung 4 durchgeführte Magnetfeldsensor 5 mit dem Magnetelement 6 zur Ermittlung der Drehwinkel-Position der Welle 3 relativ zum Gehäuseteil 2 zusammenwirken.

In einem weiteren Verfahrensschritt wird kann der Magnetfeldsensor 5 elektrisch mit der Auswertungseinheit 17 verbunden werden.

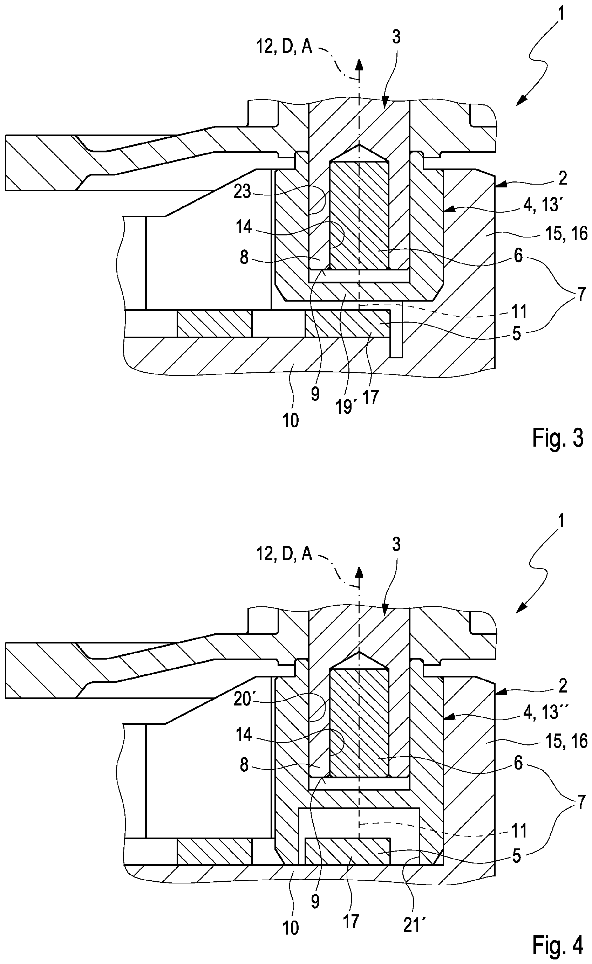

Die Figur 3 zeigt eine Variante des Beispiels der Figur 1. Im Beispiel der Figur 3 umfasst die Lagereinrichtung 4 der Baugruppe 1 ein topfartig ausgebildetes Lagerelement 13', welches das in der Ausnehmung 14 aufgenommene Magnetelement einkapselt. Dabei weist das topfartige Lagerelement 13' einen Topfboden 19' auf, welcher axial zwischen dem Magnetelement 6 und dem Magnetfeldsensor 5 angeordnet ist. Der Topfboden 19' ist vorzugsweise integral am Lagerelement 13' ausgeformt. Entsprechend Figur 3 deckt der Topfboden 19' die Ausnehmung 14 mit dem Magnetelement 6 ab.

Die Figur 4 zeigt eine weitere Variante des Beispiels der Figur 1. Die Figur 4 zeigt die Baugruppe 1 in einem Längsschnitt entlang einer Drehachse D der Welle 3. Durch die Drehachse D ist eine axiale Richtung A definiert. Im Beispiel der Figur 4 umfasst die Lagereinrichtung 4 der Baugruppe 1 ein Lagerelement 13", welches in dem Längsschnitt entlang der Drehachse D der Welle 3 eine H-förmige Geometrie besitzt. Das Lagerelement 13" weist in dem Längsschnitt eine erste und eine zweite Ausnehmung 20', 21' auf, die einander in der axialen Richtung A gegenüberliegen. Wie Figur 4 erkennen lässt, ist in der ersten Ausnehmung 20' die Welle 3 mit dem Magnetelement 6 drehbar gelagert. In der zweiten Ausnehmung 21' ist der Magnetfeldsensor 5 angeordnet. Das Lagerelement 13" stützt sich im Bereich des Wandabschnitts 10 an dem Gehäuseteil 2 ab, so dass es den in der zweiten Ausnehmung 21' angeordneten Magnetfeldsensor 5 umhüllt.

## Patentansprüche

1. Baugruppe (1) für eine Stelleinrichtung, insbesondere eines Abgasturboladers,
- mit einem Gehäuseteil (2),
- mit einer Welle (3), welche mittels einer separat zum Gehäuseteil (2) ausgebildeten Lagereinrichtung (4) drehbar am Gehäuseteil (2) gelagert ist,
- mit einem am Gehäuseteil (2) angebrachten Magnetfeldsensor (5), welcher mit einem drehfest an der Welle (3) angebrachten Magnetelement (6) zur Ermittlung einer Drehwinkel-Position der Welle (3) relativ zum Gehäuseteil (2) zusammenwirkt,
- wobei das Lagerelement (13) in einem komplementär zum Lagerelement (13) ausgebildeten Gehäusewandabschnitt (15) des Gehäuseteils (2) aufgenommen ist,
**dadurch gekennzeichnet, dass**
- auf der dem Magnetfeldsensor (5) zugewandten Stirnseite (9) der Welle (3) eine Ausnehmung (14) ausgebildet ist, in welcher das Magnetelement (6) wenigstens teilweise, vorzugsweise vollständig, aufgenommen ist,
- der Gehäusewandabschnitt (15) als Steg (16) mit ringsegment-förmiger Geometrie ausgebildet ist, welcher das Lagerelement (13) außen teilweise einfasst.

2. Baugruppe nach Anspruch 1,
**dadurch gekennzeichnet, dass**
die Lagereinrichtung (4) und der Magnetfeldsensor (5) am selben Gehäuseteil (2) angebracht sind.

3. Baugruppe nach Anspruch 1 oder 2,
**dadurch gekennzeichnet, dass**
ein dem Magnetfeldsensor (5) zugewandter axialer Endabschnitt (8) der Welle (3) mittels der Lagereinrichtung (4) drehbar am Gehäuseteil (2) gelagert ist.

4. Baugruppe nach einem der Ansprüche 1 bis 3,
**dadurch gekennzeichnet, dass**
das Magnetelement (5) auf einer dem Magnetfeldsensor (6) zugewandten Stirnseite (9) der Welle (3) angeordnet ist.

5. Baugruppe nach einem der vorhergehenden Ansprüche,
**dadurch gekennzeichnet, dass**
der Magnetfeldsensor (5) innenseitig auf einem Wandabschnitt (10) des Gehäuseteils (2) und im Abstand zum Magnetelement (6) angeordnet ist, derart, dass eine virtuelle Verlängerungsgerade (11) der Welle auf den Magnetfeldsensor (5) trifft.

6. Baugruppe nach einem der vorhergehenden Ansprüche,
**dadurch gekennzeichnet, dass**
die Lagereinrichtung (4) ein hülsenartig ausgebildetes Lagerelement (13) umfasst, durch welches die Welle (3) durchsteckbar ist.

7. Baugruppe nach einem der vorhergehenden Ansprüche,
**dadurch gekennzeichnet, dass**
die Lagereinrichtung (4) ein topfartig ausgebildetes Lagerelement (13') aufweist, welches das, vorzugsweise in der Ausnehmung (14) aufgenommene, Magnetelement (6) einkapselt.

8. Baugruppe nach Anspruch 7,
**dadurch gekennzeichnet, dass**
das topfartige Lagerelement (13') einen Topfboden (19') aufweist, welcher axial zwischen dem Magnetelement (6) und dem Magnetfeldsensor (5) angeordnet ist.

9. Baugruppe nach Anspruch 8,
**dadurch gekennzeichnet, dass**
der Topfboden (19') die Ausnehmung (14) mit dem Magnetelement (6) abdeckt.

10. Baugruppe nach einem der vorhergehenden Ansprüche,
**dadurch gekennzeichnet, dass**
die Lagereinrichtung ein Lagerelement umfasst, welches in einem Längsschnitt entlang der Drehachse der Welle eine H-förmige Geometrie mit einer ersten und einer zweiten Ausnehmung aufweist, die einander entlang einer durch die Drehachse definierten axialen Richtung gegenüberliegen, wobei in der ersten Ausnehmung die Welle mit dem Magnetelement drehbar gelagert ist und wobei der Magnetfeldsensor in der zweiten Ausnehmung angeordnet ist.

11. Baugruppe nach Anspruch 10,
**dadurch gekennzeichnet, dass**
sich das Lagerelement im Bereich des Wandabschnitts (10) an dem Gehäuseteil (2) abstützt, so dass es den in der zweiten Ausnehmung angeordneten Magnetfeldsensor umhüllt.

12. Baugruppe nach Anspruch 11,
**dadurch gekennzeichnet, dass**
der Magnetfeldsensor (5) bezüglich einer Draufsicht auf das Gehäuseteil (2) in axialer Richtung (A) der Drehwelle (3) nicht vom Steg (16) mit ringsegmentförmiger Geometrie verdeckt ist.

13. Stelleinrichtung einer variablen Turbinengeometrie oder einer Wastegate-Einrichtung, jeweils eines Abgasturboladers für ein Kraftfahrzeug, mit wenigstens einer Baugruppe (1) nach einem der vorhergehenden Ansprüche.

14. Stelleinrichtung einer Ventileinrichtung einer Abgas-Rückführungsanlage für ein Kraftfahrzeug mit wenigstens einer Baugruppe (1) nach einem der Ansprüche 1 bis 12.

15. Stelleinrichtung eines Klappenventils, insbesondere einer Frischluftanlage für ein Kraftfahrzeug, mit wenigstens einer Baugruppe (1) nach einem der Ansprüche 1 bis 12.

## Claims

1. Assembly (1) for a control device, in particular of an exhaust gas turbo-charger,
- having a housing part (2),
- having a shaft (3) which is supported rotationally on the housing part (2) by means of a bearing means (4) formed separately from the housing part (2),
- having a magnetic field sensor (5) mounted on the housing part (2), which interacts with a magnet element (6) mounted non-rotationally on the shaft (3) to determine a rotational angle position of the shaft (3) relatively to the housing part (2),
- wherein the bearing element (13) is accommodated in a housing wall portion (15) of the housing part (2) formed complementarily to the bearing element (13), **characterised in that**
- on the end face (9) of the shaft (3) facing the magnetic field sensor (5) is formed a recess (14) in which the magnet element (6) is at least partially, preferably completely, accommodated,
- the housing wall portion (15) is formed as a web (16) with annular-segment-shaped geometry which partially encloses the bearing element (13) on the outside.

2. Assembly according to claim 1,
**characterised in that**
the bearing means (4) and the magnetic field sensor (5) are mounted on the same housing part (2).

3. Assembly according to claim 1 or 2,
**characterised in that**
an axial end portion (8) of the shaft (3) facing the magnetic field sensor (5) is supported rotationally on the housing part (2) by means of the bearing means (4).

4. Assembly according to any of claims 1 to 3,
**characterised in that**
the magnet element (5) is disposed on an end face (9) of the shaft (3) facing the magnetic field sensor (6).

5. Assembly according to any of the preceding claims,
**characterised in that**
the magnetic field sensor (5) is disposed on the inner side on a wall portion (10) of the housing part (2) and distanced from the magnet element (6) such that a virtual extended straight line (11) from the shaft strikes the magnetic field sensor (5).

6. Assembly according to any of the preceding claims,
**characterised in that**
the bearing means (4) comprises a bearing element (13) sleeve-like in form, through which the shaft (3) can pass.

7. Assembly according to any of the preceding claims,
**characterised in that**
the bearing means (4) has a bearing element (13') pot-like in form, which encapsulates the magnetic element (6) which is preferably accommodated in the recess (14).

8. Assembly according to claim 7,
**characterised in that**
the pot-like bearing element (13') has a pot base (19') which is axially disposed between the magnet element (6) and the magnetic field sensor (5).

9. Assembly according to claim 8,
**characterised in that**
the pot base (19') covers the recess (14) with the magnet element (6).

10. Assembly according to any of the preceding claims,
**characterised in that**
the bearing means comprises a bearing element which in a longitudinal section along the axis of rotation of the shaft has an H-shaped geometry having a first and a second recess, which are opposite one another along an axial direction defined by the axis of rotation, wherein in the first recess the shaft with the magnet element is rotationally supported and wherein the magnetic field sensor is disposed in the second recess.

11. Assembly according to claim 10,
**characterised in that**
the bearing element rests in the region of the wall section (10) on the housing part (2), such that it surrounds the magnetic field sensor disposed in the second recess.

12. Assembly according to claim 11,
**characterised in that**
the magnetic field sensor (5) in respect of a top view onto the housing part (2) in axial direction (A) of the rotational shaft (3) is not covered by the web (16) having annular-segment-shaped geometry.

13. Control device of a variable turbine geometry or a wastegate apparatus, respectively of an exhaust gas turbo-charger for a motor vehicle, having at least one assembly (1) according to any of the preceding claims.

14. Control device of a valve apparatus of an exhaust gas recirculation apparatus for a motor vehicle having at least one assembly (1) according to any of claims 1 to 12.

15. Control device of a flap valve, in particular of a fresh air apparatus for a motor vehicle, having at least one assembly (1) according to any of claims 1 to 12.

## Revendications

1. Module (1) destiné à un dispositif de réglage, en particulier d'un turbocompresseur à gaz d'échappement,
- avec une partie de carter (2),
- avec un arbre (3), lequel est logé en rotation au niveau de la partie de carter (2) au moyen d'un dispositif de palier (4) réalisé séparément de la partie de carter (2),
- avec un capteur de champ magnétique (5) monté sur la partie de carter (2), lequel coopère avec un élément d'aimant (6) monté solidairement en rotation sur l'arbre (3) pour la détermination d'une position d'angle de rotation de l'arbre (3) par rapport à la partie de carter (2),
- dans lequel l'élément de palier (13) est reçu dans une section de paroi de carter (15) de la partie de carter (2) réalisée de manière complémentaire à l'élément de palier (13),
**caractérisé en ce que**
- un évidement (14), dans lequel l'élément d'aimant (6) est reçu au moins en partie, de préférence entièrement, est réalisé sur le côté frontal (9) de l'arbre (3) tourné vers le capteur de champ magnétique (5),
- la section de paroi de carter (15) est réalisée en tant qu'entretoise (16) à géométrie en forme de segment annulaire, laquelle borde en partie l'élément de palier (13) à l'extérieur.

2. Module selon la revendication 1,
**caractérisé en ce que**
le dispositif de palier (4) et le capteur de champ magnétique (5) sont montés sur la même partie de carter (2).

3. Module selon la revendication 1 ou 2,
**caractérisé en ce que**
une section d'extrémité (8) axiale de l'arbre (3) tournée vers le capteur de champ magnétique (5) est logée en rotation au niveau de la partie de carter (2) au moyen du dispositif de palier (4).

4. Module selon l'une quelconque des revendications 1 à 3,
**caractérisé en ce que**
l'élément d'aimant (5) est agencé sur un côté frontal (9) de l'arbre (3) tourné vers le capteur de champ magnétique (6).

5. Module selon l'une quelconque des revendications précédentes,
**caractérisé en ce que**
le capteur de champ magnétique (5) est agencé côté intérieur sur une section de paroi (10) de la partie de carter (2) et à distance de l'élément d'aimant (6) de sorte qu'une ligne droite de prolongement virtuelle (11) de l'arbre touche le capteur de champ magnétique (5).

6. Module selon l'une quelconque des revendications précédentes,
**caractérisé en ce que**
le dispositif de palier (4) comprend un élément de palier (13) réalisé en forme de douille, à travers lequel l'arbre (3) peut être enfiché.

7. Module selon l'une quelconque des revendications précédentes,
**caractérisé en ce que**
le dispositif de palier (4) présente un élément de palier (13') réalisé en forme de vase, lequel encapsule l'élément d'aimant (6) reçu de préférence dans l'évidement (14).

8. Module selon la revendication 7,
**caractérisé en ce que**
l'élément de palier (13') en forme de vase présente un fond de vase (19'), lequel est agencé axialement entre l'élément d'aimant (6) et le capteur de champ magnétique (5).

9. Module selon la revendication 8,
**caractérisé en ce que**
le fond de vase (19') recouvre l'évidement (14) avec l'élément d'aimant (6).

10. Module selon l'une quelconque des revendications précédentes,
**caractérisé en ce que**
le dispositif de palier comprend un élément de palier, lequel présente dans une coupe longitudinale le long de l'axe de rotation de l'arbre une géométrie en forme de H avec un premier et un second évidement, qui se font face l'un l'autre le long d'une direction axiale définie par l'axe de rotation, dans lequel l'arbre est logé en rotation avec l'élément d'aimant dans le premier évidement et dans lequel le capteur de champ magnétique est agencé dans le second évidement.

11. Module selon la revendication 10,
**caractérisé en ce que**
l'élément de palier s'appuie dans la zone de la section de paroi (10) au niveau de la partie de carter (2) de sorte qu'il enveloppe le capteur de champ magnétique agencé dans le second évidement.

12. Module selon la revendication 11,
**caractérisé en ce que**
le capteur de champ magnétique (5) n'est pas recouvert par l'entretoise (16) à géométrie en forme de segment annulaire en ce qui concerne une vue de dessus sur la partie de carter (2) dans la direction axiale (A) de l'arbre rotatif (3).

13. Dispositif de réglage d'une géométrie de turbine variable ou d'un dispositif de décharge, respectivement d'un turbocompresseur à gaz d'échappement pour un véhicule automobile, avec au moins un module (1) selon l'une quelconque des revendications précédentes.

14. Dispositif de réglage d'un dispositif de soupape d'une installation de retour de gaz d'échappement pour un véhicule automobile avec au moins un module (1) selon l'une quelconque des revendications 1 à 12.

15. Dispositif de réglage d'une soupape à papillon, en particulier d'une installation d'air frais pour un véhicule automobile, avec au moins un module (1) selon l'une quelconque des revendications 1 à 12.
